# EUROPEAN PATENT APPLICATION

(11) **EP 3 536 943 A1**
(43) Date of publication of application: **11.09.2019**
(21) Application number: 19155537.4
(22) Date of filing: 05.02.2019
(51) Int. Cl.: F02K 1/12, F02K 1/82

(54) **AIRCRAFT NOZZLE**

(30) Priority: 05.03.2018 GB 201803483
(71) Applicant: Rolls-Royce plc, London SW1E 6AT (GB)
(72) Inventor: Colebrooke, Jack, Derby, Derbyshire DE24 8BJ (GB)
(74) Representative: Rolls-Royce plc

(57) **Abstract**

There is described a flap for a variable area exhaust nozzle of a gas turbine engine, comprising a support structure and a gas shield having a plurality of gas shield segments connected to the support structure and adjacently arranged along a longitudinal direction of the flap corresponding to flow through the nozzle. Each of the gas shield segments comprises a flowpath section arranged to cooperate with a corresponding flowpath section of an adjacent gas shield segment to define a flowpath surface of the gas shield to bound flow through the nozzle. The gas shield segments are configured to permit the respective flowpath section to move longitudinally relative the support structure in response to thermal expansion of the gas shield.

## Description

The technology described herein concerns an aircraft nozzle and, more particularly, an exhaust nozzle petal for a gas turbine engine.

Gas turbine engines used in some aircraft include exhaust systems that have variable area exhaust nozzles. Variable area exhaust nozzles may include articulated flaps, or petals, that are moveable with respect to one another to vary the area of the exhaust nozzles both to control the engine operating conditions and to optimise the propulsion of the aircraft.

A conventional flap for a variable area exhaust nozzle comprises a monolithic or fabricated gas shield having a backbone which is integrally fixed and connected thereto. The gas shield may be pivotable at one end about a static wall of the engine or the end of another flap of the variable area exhaust nozzle. The backbone may be connected to an actuator arm of the gas turbine engine for selectively varying the position of the gas shield.

The gas shield is typically in the form of a panel having a gas flowpath surface that is exposed to hot combustion gases in an exhaust stream of the nozzle, and a backside surface (which includes the backbone) that is in a cooler environment. This temperature differential across both surfaces can cause failure, such as a fracture at the connection between the gas shield and the backbone, of the flap due to strain caused by thermal expansion of the gas shield relative to the backbone.

While it is known to increase the thickness of the overall flap in order to increase its resilience to thermal strain, this has the disadvantage of increasing the overall weight of the flap and its cost of manufacture. Therefore, other arrangements have been developed to increase the resilience of a flap to thermal strain. In particular, it is known to increase the resilience of a flap to strain caused by thermal expansion by providing a segmented flap design. In particular, it is known to provide a gas shield comprising a plurality of interlocking segments that are immovably fixed to the backbone in use.

A disadvantage of such a design is that the number of parts, and therefore the assembly time and risk of losing one or more parts during operation, increases.

Alternative variable area exhaust nozzles for gas turbine engines therefore remain an area of interest.

According to an aspect of the technology described herein, there is provided a flap for a variable area exhaust nozzle of a gas turbine engine, comprising a support structure and a gas shield having a plurality of gas shield segments connected to the support structure and adjacently arranged along a longitudinal direction of the flap corresponding to flow through the nozzle; wherein: each of the gas shield segments comprises a flowpath section arranged to cooperate with a corresponding flowpath section of an adjacent gas shield segment to define a flowpath surface of the gas shield to bound flow through the nozzle; and each of the gas shield segments is configured to permit the respective flowpath section to move longitudinally relative the support structure in response to thermal expansion of the gas shield.

The plurality of gas shield segments may include only a subset of the total number of gas shield segments connected to the support structure, or may include all of the gas shield segments connected to the support structure.

Each flowpath section may comprise a leading edge and a trailing edge. Adjacent flowpath sections may cooperate at respective trailing and leading edges such that longitudinal thermal expansion of the flowpath sections accumulates along the flap to cause longitudinal displacement of at least one of the flowpath sections.

Each gas shield segment may be connected to the support structure by at least one arm section that extends from the respective flowpath section. The at least one arm section may be fixed to the support structure.

The at least one arm section of a respective gas shield segment may be (and in an embodiment the arm sections of the plurality of gas shield segments are) configured to flex or pivot to accommodate a longitudinal displacement of the flowpath section of the gas shield segment(s).

The support structure may form a housing that defines a cavity within which the plurality of gas shield segments are received. There may be an internal cooling flow pathway through the gas shield segments which permits an internal cooling flow received in the cavity to flow between adjacent gas shield segments.

Each arm section of a (or of the plurality of) gas shield segment(s) may comprise at least one cooling hole extending therethrough to permit the internal cooling flow to flow between adjacent gas shield segments.

The flowpath section of a (e.g. each) gas shield segment may comprise a plurality of cooling holes extending therethrough to permit the internal cooling flow to flow from the cavity to the flowpath surface.

Respective gas shield segments may be configured such that the internal cooling flow is allowed to flow from the cavity to the flowpath surface through a gap between adjacent gas shield segments.

Each flowpath section of respective gas shield segments may be connected to the support structure by two respective arm sections.

The two respective arm sections and the flowpath section of a gas shield segment may define a U-shaped profile in cross-section.

Although the technology described herein has been described with respect to the flap itself, it will be appreciated that the technology described herein is applicable more widely to the exhaust nozzle itself.

Thus according to an aspect of the technology described herein there is provided a variable area exhaust nozzle for a gas turbine engine, comprising a flap in accordance with any one of the above statements.

The technology described herein also extends to the gas turbine engine itself. Thus according to an aspect of the technology described herein there is provided a gas turbine engine comprising a flap in accordance with any one of the above statements.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a cross-sectional view of a gas turbine engine that includes a variable area exhaust nozzle adapted to adjust various flow streams as they exit the engine;
**Figure 3** shows two views of a flap for a variable area exhaust nozzle in accordance with the technology described herein;
**Figure 4** shows an alternative flap for a variable area exhaust nozzle in accordance with the technology described herein;
**Figure 5** shows a flap for a variable area exhaust nozzle having cooling holes in accordance with the technology described herein; and
**Figure 6** shows an alternative flap for a variable area exhaust nozzle having cooling holes in accordance with the technology described herein.

In the Figures, like reference numerals are used to refer to like features, where appropriate.

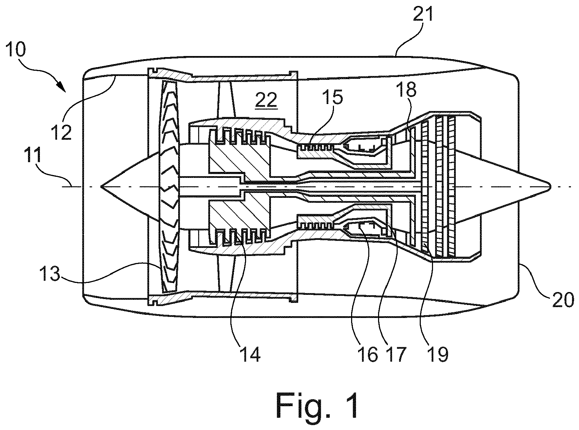

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and at least part of the exhaust nozzle 20.

The gas turbine engine 10 works in the conventional manner so that air entering the intake 12 is compressed by the fan 13 to produce two air flows: a first air flow into the engine core at which the intermediate pressure compressor 14 is located, and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by a suitable interconnecting shaft.

Other gas turbine engines to which the technology described herein may be applied may have alternative configurations. By way of example such engines may have an alternative number of air flows, interconnecting shafts (e.g. two) and/or an alternative number of compressors and/or turbines. Further the engine may comprise a gearbox provided in the drive train from a turbine to a compressor and/or fan.

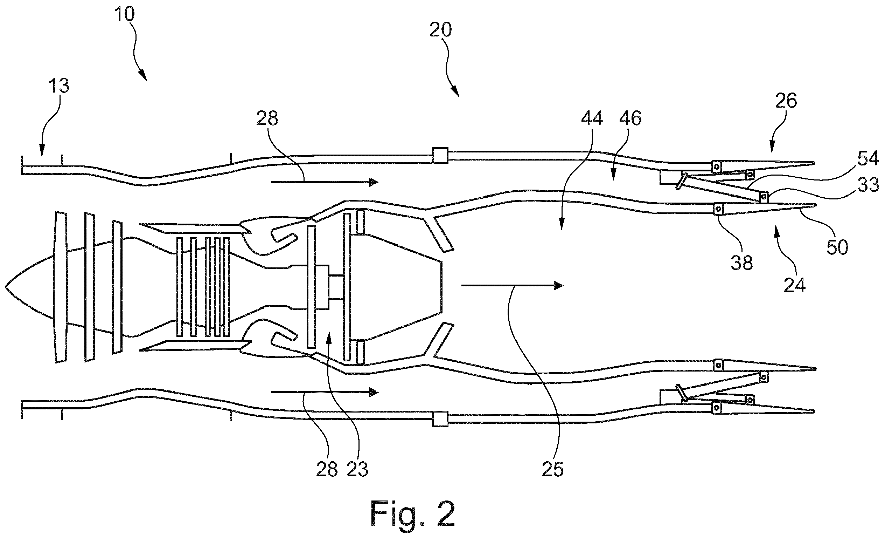

**Figure 2** illustrates a gas turbine engine 10 having features corresponding to those described with respect to Figure 1. The gas turbine engine 10 of Figure 2 has a variable area exhaust nozzle 20.

As can be seen in Figure 2, air entering the intake is compressed by the fan 13 to produce two air flows: a first (pressurised) air flow 25 into the engine core 23 (that includes the intermediate pressure compressor 14 of Figure 1, for example) and a second air flow 28 of bypass air that is passed around the engine core 23.

The nozzle 20 is coupled to the engine core 23, and the nozzle 20 includes an inner, primary nozzle 24 and an outer, secondary nozzle 26. The primary nozzle 24 is arranged to adjust the first air flow 25 of core air. The secondary nozzle 26 cooperates with the primary nozzle 24 to adjust the second air flow 28 of bypass air. The nozzle 20 includes a primary passageway 44 and a secondary passageway 46 in addition to the primary and secondary nozzles 24, 26, as shown in Figure 2. The first air flow 25 is conducted through the primary nozzle 24 via the primary passageway 44. The second air flow 28 is conducted through the secondary nozzle 26 via the secondary passageway 46. By controlling the flow of air through and around the engine core 23, the air flow nozzles 24, 26 adjust (or trim) the operating point of the gas turbine engine 10.

The primary nozzle 24 includes a flap 50 and an actuator (or strut) 54 connected to the flap 50 by an actuator connector 33 (which forms the backbone of the flap). The flap 50 is mounted to pivot relative to a static wall of the engine, and in some cases relative to another flap (not shown), via a pivot connector 38. The actuator 54 is configured to pivot the flap 50 to adjust the air flow outlet area. Adjustment of the outlet area via the actuator 54 adjusts the first air flow 25 that passes through the primary nozzle 24. Additionally, because the secondary passageway 46 is partially defined by flap 50, adjustment of the outlet area adjusts the secondary passageway 46 and the second air flow 28 that passes through the secondary passageway 46.

In one example, the actuator 54 may be embodied as, or otherwise include, a hydraulically-operated actuator such as a hydraulic piston. In another example, the actuator 54 may be embodied as, or otherwise include, an electrically-powered actuator such as an electrically-powered linear actuator.

It will be appreciated that secondary passageway 46 (which receives second air flow 28) will be exposed to a much cooler environment than that in the primary passageway 44 (which receives high pressure exhaust gas from the first air flow 25) on the other side (the flowpath surface side) of the primary nozzle 24. The temperature differential can cause distortion and can lead to premature wear fatigue (and thus failure) of the primary nozzle 24. For example, the temperature differential may cause any seals formed between flap 50 and various connectors (such as the actuator and pivot connectors 33, 38) to fail.

It will be appreciated that while in the arrangement of Figure 2 there are two airflows and corresponding passageways 44 and 46, this is not required. There may be only a single passageway for receiving one or more air flows, or more than two passageways (and corresponding air flows), as desired.

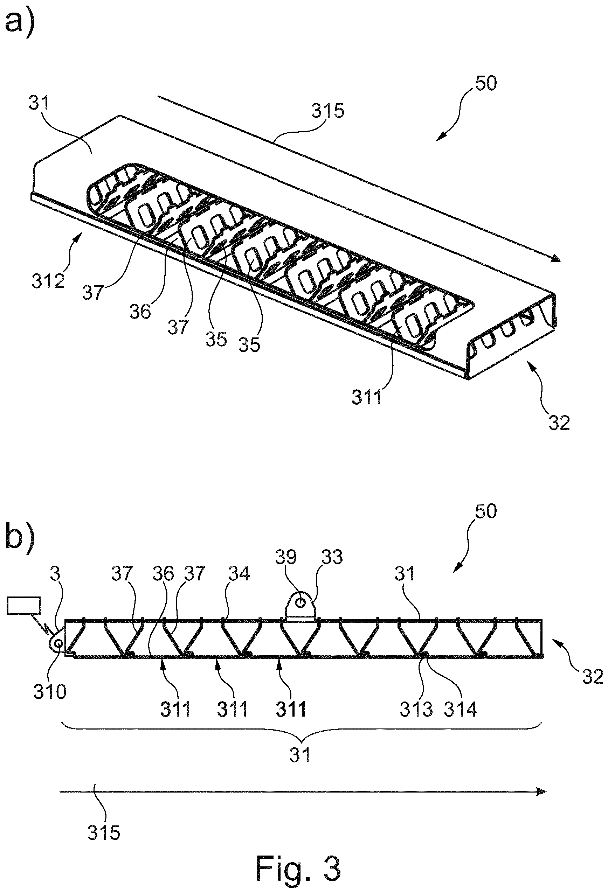

**Figure 3** shows flap 50 of the primary nozzle 24 of Figure 2 in greater detail. In particular, Figure 3a shows an isometric cut out view of the flap 50, while Figure 3b shows a cross-sectional view of the flap 50 along the longitudinal direction 315 of the flap 50 corresponding to flow through the nozzle 20. The flap 50 is elongate along a longitudinal direction 315, has a width along a lateral direction which may be tangential to a circumferential direction of the nozzle 24 in use, and a height along a substantially radial direction of the engine in use.

The flap 50 comprises a support structure 31 and a gas shield 32. The support structure 31 reacts the weight of the gas shield 32 and the forces acting on the gas shield 32. In this example, the support structure occupies a generally cuboidal volume (i.e. it is generally cuboidal), with a radially-outer surface and lateral side surfaces. In this example, the support structure 31 has an open radially-inner face to receive the gas shield 32. In this example, the support structure has an open distal longitudinal end (i.e. farthest from the engine core), and a proximal longitudinal end surface coupled to the radially-outer surface and the lateral side surfaces. The support structure 31 defines a housing for the gas shield 32.

It can be seen in Figure 3b that the support structure 31 includes an actuator connector 33 for securing the actuator (or strut) 54 of Figure 2 to the flap 50. In the illustrated example of Figure 3b, the actuator connector 33 is in the form of a tab or protrusion extending from the radially-outer surface of the support structure 31 and has a hole 39 extending therethrough in the transverse direction. The hole 39 is suitable for receiving a corresponding connector of the actuator 54 (not shown). The support structure 31 of the flap 50 also includes a pivot connector 38 with a hole 310 for connection to a corresponding connector on a static wall of the engine (not shown) or on a separate flap (not shown) of the nozzle 24. In this example, the pivot connector 38 is mounted on and protrudes from the proximal longitudinal end surface of the support structure 31.

It will be appreciated that any suitable connectors can be used instead of the actuator connector 33 and the pivot connector 38 shown in Figure 3b, and the type of connectors used will depend on the type of connectors used on the actuator 54, the static wall of the engine or on the separate flap (not shown) of the nozzle 24.

With reference to both Figure 3a and Figure 3b, the gas shield 32 is formed of a plurality of gas shield segments 311 connected to the support structure 31 and adjacently arranged in the longitudinal direction 315 of the flap 50. Each one of the plurality of gas shield segments 311 in Figure 3 comprises a flowpath section 36 which cooperates with a corresponding flowpath section 36 of a longitudinally adjacent gas shield segment 311 to define a substantially planar flowpath surface 312 of the gas shield 32. The gas shield segments 311 are each mounted to the support structure 31 so that in this example the respective flowpath sections 36 are aligned with the plane of the radially-inner open face of the support structure 31. However, in other examples the flow path sections 36 may protrude out of a housing defined by the support structure 31, or may be within such a housing.

The flowpath surface 312 will be exposed during operation to the hot exhaust gases in primary passageway 44 and therefore bounds the flow through the nozzle 20. The flowpath surface 312 also shields the support structure 31 (and any other associated elements such as actuator connector 33) from the high temperature exhaust gases in passageway 44.

In this example, each gas shield segment 311 is connected to the support structure 31 by two arm sections 37 extending from the flowpath section 36 at leading and trailing edges 314, 313 (defined with respect to the direction of flow past the flap 50) so that each segment 311 has a generally U-shaped cross-section along a plane normal to the lateral direction. In other examples there may be a single arm section and the segment may have an inverted T-shape or L shape.

In this example, the arm sections 37 include tabs 34 that are welded to the support structure 31 to anchor the gas shield segments 311 to the support structure 31.

The arm section of the example gas shield segment 311 shown in Figure 3b is shaped at its leading edge 314 to define a recess or shoulder radially offset from the flowpath section 36 to receive a trailing edge portion of an adjacent gas shield segment 311. The arm section 37 at the trailing edge 313 of each gas shield segment 311 is cooperatively shaped to define a corresponding tab. In this example, the tab includes a trailing edge portion of the flowpath section 36 and a portion of the trailing edge arm 37 that is folded over and against the flowpath section 36. In this example, the arms 37 and flowpath section 36 are formed of sheet material of uniform thickness, and so the tab portion is of double thickness and the recess or shoulder at the leading edge 314 of the adjacent segment is of corresponding depth such that the adjacent flowpath sections 36 are susbtantially flush with one another. The recess and tabs correspond in that they are shaped so that the tab of a gas shield segment 311 conforms with the shape of the recess of another gas shield segment 311, and vice versa.

The plurality of flowpath sections 36 cooperate so that the tab at a trailing edge 313 of a given flowpath section 36 abuts and engages the recess of a leading edge 314 of an adjacent flowpath section 36 in the downstream direction of gas flow. This engagement provides a tortuous path for gas flow there between, thereby forming a gas seal between the adjacent flowpath sections 36. The interlocking tabs and recesses may be in a slidable sealing engagement.

The engagement between a trailing edge 313 of a given flowpath section 36 and a leading edge 314 of an adjacent flowpath section 36 may be such that longitudinal thermal expansion of the plurality of flowpath sections 36 (or rather the movement resulting therefrom) will accumulate over the length of the gas shield 32 or flap 50.

To facilitate and accommodate such expansion, the arm sections 37 are flexible to allow longitudinal movement of the flowpath sections 36 relative to the support structure 31. That is, each arm section 37 can angularly displace in the longitudinal direction 315 in response to and to permit longitudinal thermal expansion of individual flowpath sections 36 to accumulate along the length of the flap 50. This enables the planar flowpath surface 312 (or at least one or more flowpath sections 36 thereof) to translate longitudinally relative to the support structure 31 while maintaining its planar profile and orientation. Such an arrangement may help to accommodate the thermal strain experienced by the flap 50 during operation, without placing excessive stress on connective members between a hot gas washed surface and a cooler support structure owing to differential thermal expansion between them.

As mentioned above, the arm sections 37 and the flowpath section 36 of each gas shield segment 311 substantially define a U-shaped profile in cross-section. This structure enables distortion of the gas shield segments (311) in the manner of a quadrilateral body when fixed to the support, such that the flowpath surface 312 maintains a substantially planar profile and its original angular orientation relative the support structure during expansion and resulting displacement of the gas shield 32. This advantageously minimizes distortion or bowing of the gas shield 32 and support structure 31 and therefore the risk of fractures. Nevertheless, it will be appreciated that thermal expansion may result in minor angular displacement of individual flowpath segments 36 in use.

Furthermore, the arm sections 37 help to decouple strain in the hot and cold sections of the flap 50 assembly, thereby reducing thermal strain on the support structure 31 (and therefore connectors 33, 38) owing to thermal expansion of the gas shield 32. For example, the hot and cold parts of the flap 50 are decoupled in that expansion of the hot gas shield 32 will not in turn cause an equal amount of expansion of the colder support structure 31.

Respective gas shield segments 311 may be formed from a single, folded piece of sheet metal. This may reduce the complexity and cost of manufacturing the gas shield. The folded nature of the gas shield segments 311 may also increase the flexibility of the arm sections 37, in so much as it accommodates movement of the flowpath sections 36 relative to the support structure 31, whilst avoiding the need for connections between the arm sections 37 and the flowpath section 36, which may be susceptible to fractures.

It can be seen in Figure 3 that the flowpath surface 312 is supported at a radial distance away from the support structure 31. This may permit the decoupling between the hot and cold parts of the flap 50.

As mentioned above, the support structure 31 forms a housing that defines a cavity within which the plurality of gas shield segments 311 are received. The housing and the flowpath sections 36 define an internal cooling flow pathway through the gas shield segments 311 which permits an internal cooling flow received in the cavity 55 to flow between adjacent gas shield segments 311. It will be appreciated that the cooling flow pathway is internal as it is bounded by the support structure 31 and the flowpath sections 36 of the gas shield 32.

In the arrangement of Figure 3a, each arm section 37 of the plurality of gas shield segments 311 comprises a plurality of cooling holes 35 extending therethrough. These cooling holes 35 permit the internal cooling flow to flow between the respective adjacent gas shield segments 311 so as to form a plenum of cooling fluid within the cavity. The cooling flow may be a cooling airflow directed from a bypass airflow of the engine, such as airflow 28 shown in Figure 2. This arrangement may further thermally decouple the support structure 31 and the gas shield 32 and their respective thermal strains.

While the arrangement described with respect to Figure 3 includes seals formed by interlocking tabs and recesses, this is not required. Any suitable seal arrangement may be used, as desired.

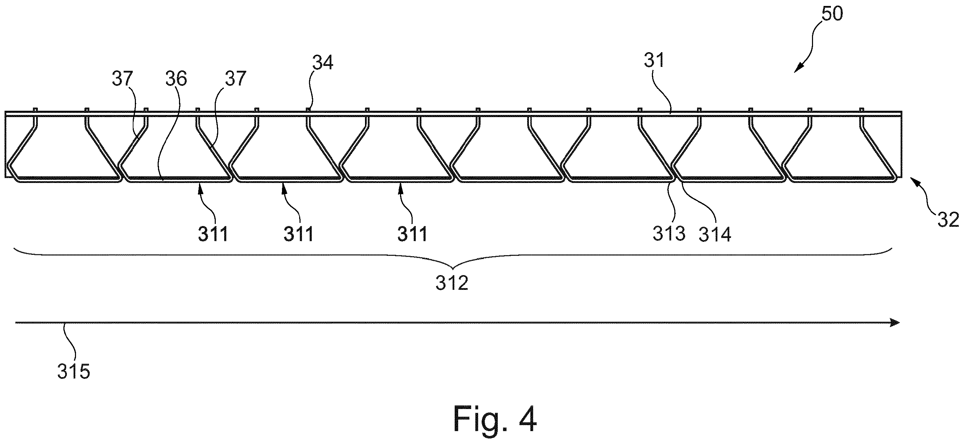

**Figure 4** shows flap 50 of the primary nozzle 24 of Figure 2 having an alternative seal arrangement defined between the gas shield segments to that of Figure 3. In particular, Figure 4 shows a cross-sectional view of the flap 50 along the longitudinal direction 315 of the flap 50. The flap 50 of Figure 4 has features corresponding to those of Figure 3, except that seals between gas shield segments 311 are not formed by interlocking tabs and recesses on the arm sections 37. Instead, the seals are formed by correspondingly angled surfaces of the arm sections 37 which are brought into abutment with each other when the gas shield segments 311 are mounted on the support structure 31 in adjacent relationship.

In particular, the arm sections 37 at the trailing edges 313 of the gas shield segments 311 are each arranged at an acute angle to the adjacent flowpath section 36. The arm sections 37 at the leading edges 314 of the gas shield segments 311, meanwhile, are each correspondingly arranged at an obtuse angle to the adjacent flowpath section 36 so that a seal portion of the arm section 37 at a leading edge 314 of a gas shield segment 311 conforms to a portion of the arm section 37 at a trailing edge 313 of an adjacent gas shield segment 311 to form a seal. Beyond the seal portion, the arm section 37 may depart from the profile of the adjacent arm so that there is a gap between them.

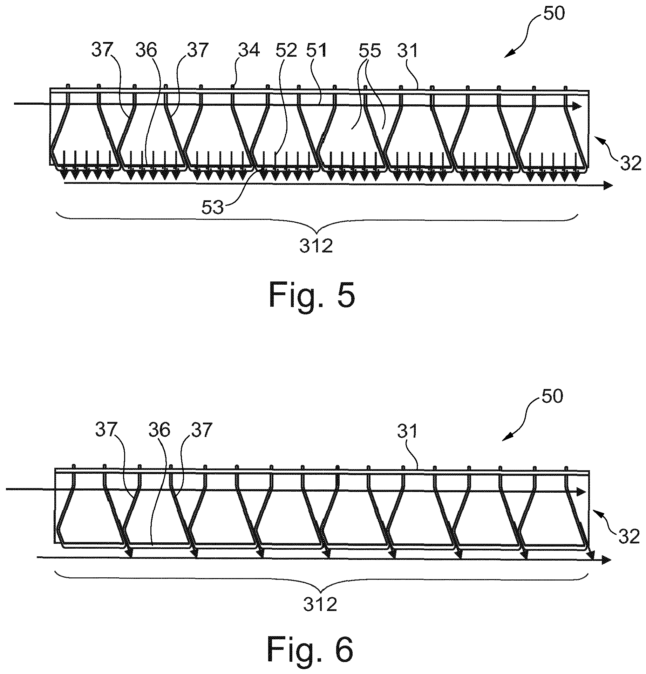

Where the support structure 31 forms a housing defining a cavity for receiving an internal cooling flow (such as a cooling airflow), e.g. to create a cooling plenum, some of the internal cooling flow may be used to cool other parts of the petal or flap. For example, it is possible to provide a cooling flow to the flowpath surface 312 of the gas shield 32, as will now be described with respect to Figures 5 and 6.

**Figure 5** shows a cross-sectional view of a flap 50 along the longitudinal direction. The flap 50 of Figure 5 has features corresponding to those of Figure 4. However, in the arrangement of Figure 5, the flowpath sections 36 of the flap 50 each includes a plurality of cooling holes 53 extending therethrough from a cavity 55 formed within the support structure 31. As denoted by arrows 52 in Figure 5, the cooling holes 53 allow the internal cooling flow 51 in the cavity 55 to flow (effuse) from the cavity 55 to the flowpath surface 312 of the gas shield 32. This may be advantageous to cool the gas shield 32, e.g. by effusion or film cooling, thereby reducing the thermal strain on the gas shield 32 and the support structure 31.

**Figure 6** shows a cross-sectional view of the flap 50 along the longitudinal direction. The flap 50 of Figure 5 has features corresponding to those of Figure 4. In the arrangement of Figure 6, however, the gas shield segments 311 are configured such that an internal cooling flow 51 is allowed to flow (effuse) 62 from the cavity 55 to the flowpath surface 312 through gaps 63 between adjacent gas shield segments 311, particularly through gaps 63 between a trailing edge 313 of a given flowpath section 36 and a cooperating leading edge 314 of an adjacent flowpath section 36.

The gaps 63 may be configured or engineered such that the amount of internal cooling flow leakage is controlled at a desired amount to allow effusion cooling of the flowpath surface 312, but still forming a sufficient gas seal to the exhaust gases. For example, there may be some additional profiling along the leading and/or trailing edges of adjacent flowpath sections 36 to define gaps which permit the leakage of cooling flow 51.

It will be appreciated that whilst the arrangement described above include a support structure 31 forming a housing, this is not required. The support structure 31 may be a substantially planar structure that does not define a cavity within which the gas shield 32 is positioned. Additionally, it will be appreciated that in some arrangements the respective arm sections 37 will not be provided with a plurality of cooling holes 35 extending therethrough.

In view of the above, it will be appreciated that the technology described herein may be advantageous in that it reduces the total amount of thermal expansion, thereby reducing the amount of thermal strain in each segment. Further, the flexure of the gas shield over the flowpath surface relative the support structure permits a difference in thermal expansion between the flowpath sections and the support structure to be accommodated by deformation of the arm sections in response to a tensile (or compressive) forces between the flowpath sections and the support structure.

It will be understood that the technology described herein is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A flap (50) for a variable area exhaust nozzle (20) of a gas turbine engine (10), comprising a support structure (31) and a gas shield (32) having a plurality of gas shield segments (311) connected to the support structure (31) and adjacently arranged along a longitudinal direction (315) of the flap corresponding to flow through the nozzle; wherein:
each of the gas shield segments (311) comprises a flowpath section (36) arranged to cooperate with a corresponding flowpath section (36) of an adjacent gas shield segment (311) to define a flowpath surface (312) of the gas shield (32) to bound flow through the nozzle; and
each of the gas shield segments (311) is configured to permit the respective flowpath section (36) to move longitudinally relative the support structure (31) in response to thermal expansion of the gas shield (32); wherein each gas shield segment comprises arm sections (37) including tabs (34) that are welded to the support structure (31) to anchor the gas shield segments (311) to the support structure (31).

2. A flap (50) as claimed in claim 1, wherein:
each flowpath section (36) comprises a leading edge (314) and a trailing edge (313); and
adjacent flowpath sections (36) cooperate at respective trailing and leading edges (313, 314) such that longitudinal thermal expansion of the flowpath sections (36) accumulates along the flap (50) to cause longitudinal displacement of at least one of the flowpath sections (36).

3. A flap (50) as claimed in claim 1 or 2, wherein each gas shield segment (311) is connected to the support structure (31) by at least one arm section (37) that extends from the respective flowpath section (36) and is fixed to the support structure (31).

4. A flap (50) as claimed in claim 3, wherein:
the at least one arm section (37) of a respective gas shield segment (311) is configured to flex or pivot to accommodate a longitudinal displacement of the flowpath section (36) of the gas shield segment (311).

5. A flap (50) as claimed in claim 3 or 4, wherein:
the support structure (31) forms a housing that defines a cavity (55) within which the plurality of gas shield segments (311) are received; and
there is an internal cooling flow pathway through the gas shield segments (311) which permits an internal cooling flow received in the cavity (55) to flow between adjacent gas shield segments (311).

6. A flap (50) as claimed in claim 5, wherein each arm section (37) of a gas shield segment (311) comprises at least one cooling hole (53) extending therethrough to permit the internal cooling flow to flow between adjacent gas shield segments (311).

7. A flap (50) as claimed in claim 5 or 6, wherein the flowpath section (36) of a gas shield segment (311) comprises a plurality of cooling holes (53) extending therethrough to permit the internal cooling flow to flow from the cavity (55) to the flowpath surface (312).

8. A flap (50) as claimed in claim 5, 6 or 7, wherein respective gas shield segments (311) are configured such that the internal cooling flow is allowed to flow from the cavity (55) to the flowpath surface (312) through a gap (63) between adjacent gas shield segments (311).

9. A flap (50) as claimed in any preceding claim, wherein each flowpath section (36) of respective gas shield segments (311) is connected to the support structure (31) by two respective arm sections (37).

10. A flap (50) as claimed in claim 9, wherein the two respective arm sections (37) and the flowpath section (36) of a gas shield segment (311) define a U-shaped profile in cross-section.

11. A variable area exhaust nozzle (20) for a gas turbine engine (10), comprising a flap (50) as claimed in any one of the preceding claims.

12. A gas turbine engine (10) comprising a flap (50) as claimed in any one of claims 1-10 or a variable area exhaust nozzle (20) as claimed in claim 11.
